(19) Europäisches Patentamt

European Patent Office

Office européen des brevets

(11) **EP 0 987 808 A2**

(12) **EUROPÄISCHE PATENTANMELDUNG**

(43) Veröffentlichungstag:
**22.03.2000 Patentblatt 2000/12**

(51) Int. Cl.⁷: **H02J 7/00**, A61N 1/378,
H04R 25/00

(21) Anmeldenummer: **98121498.4**

(22) Anmeldetag: **12.11.1998**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **21.08.1998 DE 19838137**

(71) Anmelder:
**IMPLEX GmbH Spezialhörgeräte**
**D-85737 Ismaning (DE)**

(72) Erfinder:
• **Baumann, Joachim Dipl.-Ing.**
**81679 München (DE)**
• **Leysieffer, Hans Dr.-Ing.**
**82024 Taufkirchen (DE)**
• **Volz, Andreas Dipl.-Ing.**
**81929 München (DE)**

(74) Vertreter:
**Schwan, Gerhard, Dipl.-Ing. et al**
**Elfenstrasse 32**
**81739 München (DE)**

(54) **Vorrichtung und Verfahren zum Laden von wiederaufladbaren Akkumulatoren von Implantaten**

(57) Gegenstand der Erfindung sind eine Vorrichtung und ein Verfahren zum Laden von wiederaufladbaren NiCd-, Ni-Metallhydrid- oder Lithium- Akkumulatoren (12) von Implantaten durch transkutanes Übermitteln von elektrischer Energie von einem externen Energiesendeteil (11) an einen einen Teil des Implantats bildenden Energieempfangsteil (10). Die Ladevorrichtung ist mit einem Ladestromgeber (27, 32, 34) versehen ist, der in einer ersten Ladephase (T1) einen relativ hohen Ladestrom ($I_L$) fließen läßt und der, nachdem die Zellenspannung ($U_Z$) des Akkumulators eine vorbestimmte Ladegrenzspannung ($U_G$) erreicht hat, in einer zweiten Ladephase (T2) den Ladestrom im Vergleich zu dem am Ende der ersten Ladephase fließenden Ladestrom reduziert. Erfindungsgemäß, ist der Ladestromgeber so ausgebildet ist, daß er im Verlauf der zweiten Ladephase den Ladestrom auf einen solchen Wert einstellt, daß die Zellenspannung während der zweiten Ladephase mindestens näherungsweise auf einem vorbestimmten konstanten Spannungswert ($U_G$) gehalten wird.

Fig. 1

EP 0 987 808 A2

**Beschreibung**

Die Erfindung betrifft eine Ladevorrichtung zum Laden von wiederaufladbaren NiCd-, Ni-Metallhydrid- oder Lithium- Akkumulatoren von Implantaten durch transkutanes Übermitteln von elektrischer Energie von einem externen Energiesendeteil an einen einen Teil des Implantats bildenden Energieempfangsteil, wobei die Ladevorrichtung mit einem Ladestromgeber versehen ist, der in einer ersten Ladephase einen relativ hohen Ladestrom fließen läßt und der, nachdem die Zellenspannung des Akkumulators eine vorbestimmte Ladegrenzspannung erreicht hat, in einer zweiten Ladephase den Ladestrom im Vergleich zu dem am Ende der ersten Ladephase fließenden Ladestrom reduziert. Die Erfindung befaßt sich ferner mit einem Verfahren zum Laden von implantierten Akkumulatoren von Implantaten durch transkutanes Übermitteln von elektrischer Energie, bei dem in einer ersten Ladephase ein relativ hoher Ladestrom fließt, und bei dem, nachdem die Zellenspannung des Akkumulators eine vorbestimmte Ladegrenzspannung erreicht hat, in einer zweiten Ladephase der Ladestrom im Vergleich zu dem am Ende der ersten Ladephase fließenden Ladestrom reduziert wird. Dabei versteht es sich, daß der Akkumulator je nach Bedarf ein- oder mehrzellig aufgebaut, das heißt mit einem oder mehreren Sekundärelementen versehen sein kann

Beim Aufladen eines Akkumulators wird nur ein Teil der eingespeisten elektrischen Energie in Ladung umgesetzt. Ein anderer Teil dieser Energie wird am Innenwiderstand des Akkumulators in Wärme umgewandelt und geht für die Ladung verloren. Die Verlustleistung kann zu einer unzulässigen Temperaturerhöhung des Implantatgehäuses und damit zu einer Schädigung des umliegenden Gewebes führen.

Ein weiterer Teil der eingespeisten Energie betreibt elektrochemische Nebenreaktionen, die beispielsweise zu einer Gasentwicklung innerhalb des Akkumulators führen. Dies gilt vor allem, wenn der Akkumulator einen höheren Ladepegel erreicht hat, zum Beispiel auf mehr als 80% seiner Nennkapazität aufgeladen ist. Insbesondere im langjährigen Betrieb eines implantierten Akkumulators verschiebt sich das Kapazitätsverhältnis der positiven und der negativen Elektrode der Akkumulatorzelle oder - zellen wegen Elektrolytverlust und Passivierung der Elektrodenoberflächen und/oder durch Korrosion mit der Zeit so, daß es während der Aufladung zu einem immer stärkeren Übergewicht der gasbildenden gegenüber den gasverzehrenden Reaktionen kommt und so der Innendruck der Zelle beim Laden rasch ansteigt. Bei ansteigendem Gasdruck kommt es zu einer Aufblähung des Zellengehäuses, die unter Umständen zur Zerstörung der Zelle oder des Implantates führen kann.. Die zunehmende Korrosion und/oder Passivierung der Elektroden sowie die Abnahme der vom Elektrolyt benetzten Elektrodenfläche bewirken gleichzeitig eine Erhöhung des Innenwiderstandes des Akkumulators.

Es ist bekannt (US-PS 5,690,693, US-PS 5,702,431 und US-PS 5,411,537), bei einer solchen Ladevorrichtung und einem Ladeverfahren der genannten Art ein Ladeprotokoll zu benutzen, das dafür sorgt, daß mit zunehmendem Ladepegel des Akkumulators entweder der momentane Ladestrom oder das Tastverhältnis eines fest vorgegebenen Ladestromes reduziert wird. So wird in der US-PS 5,411,537 ein mehrstufiges Ladeverfahren für Lithium- Akkumulatoren vorgeschlagen, bei dem während des Ladevorgangs die Leerlaufspannung des Akkumulators periodisch abgefragt wird, um daraus den Ladezustand des Akkumulators abzuschätzen, und bei dem in Abhängigkeit von der jeweils ermittelten Leerlaufspannung einer von mehreren vorbestimmten Ladestromwerten ausgewählt wird, wobei die Ladestromwerte mit steigender Leerlaufspannung kleiner werden. Der Ladevorgang wird beendet, wenn die gemessene Leerlaufspannung einen vorgegebenen Grenzwert übersteigt. Aus der US-PS 5,702,431 ist eine Alternative des vorstehend skizzierten mehrstufigen Ladeverfahrens bekannt, bei dem die Amplitude des Ladestromes konstant bleibt, der Ladestrom aber pulsweitenmoduliert wird und das Tastverhältnis in Abhängigkeit von den periodisch ermittelten Leerlaufspannungswerten geändert wird.

Der Erfindung liegt die Aufgabe zugrunde, eine Vorrichtung und ein Verfahren zum Laden von wiederaufladbaren NiCd-, Ni-Metallhydrid- oder Lithium- Akkumulatoren von Implantaten zu schaffen, welche einerseits für den Akkumulator schädliche Ladebedingungen mit großer Zuverlässigkeit ausschließen, insbesondere die Temperaturentwicklung und die Gasbildung in einem implantierten Akkumulator weitestgehend beschränken, andererseits aber eine effektive und damit vergleichsweise rasche Aufladung gewährleisten.

Diese Aufgabe wird bei einer Ladevorrichtung mit den Merkmalen des Oberbegriffs des Anspruchs 1 erfindungsgemäß dadurch gelöst, daß der Ladestromgeber so ausgebildet ist, daß er im Verlauf der zweiten Ladephase den Ladestrom auf einen solchen Wert einstellt, daß die Zellenspannung währen der zweiten Ladephase mindestens näherungsweise auf einem vorbestimmten konstanten Spannungswert gehalten wird.

Ein Verfahren mit den Merkmalen des Anspruchs 13 ist erfindungsgemäß dadurch gekennzeichnet, daß im Verlauf der zweiten Ladephase der Ladestrom auf einen solchen Wert eingestellt wird, daß die Zellenspannung mindestens näherungsweise auf einem vorbestimmten konstanten Spannungswert gehalten wird.

Bei der Vorrichtung und dem Verfahren nach der Erfindung wird die Aufladung des Akkumulators abhängig vom Innenwiderstand des Akkumulators reguliert. Es ist gewährleistet, daß in die Zelle immer nur gerade soviel Energie eingeladen wird, wie es der elektrochemische Zustand erlaubt, ohne daß es dabei zu einer übermäßigen Gasung oder Erwärmung der Zelle kommt. Ältere Zellen mit ansteigendem Innenwiderstand erhalten auf diese Weise weniger Ladung als neue Zellen. Die Aufladung kann auch ohne die unmittelbare Gefahr einer Überladung nach individuellen Bedürfnissen des Patienten gestaltet werden, weil der Ladestrom reduziert wird, wenn die Ladegrenzspannung erreicht ist. Eine fast volle Zelle erreicht diese Ladegrenzspannung sehr schnell und erhält so durch den geringen Ladestrom nur wenig zusätzliche Ladung bis zum Ende des Ladevorgangs.

Bei dem Implantat kann es sich grundsätzlich um eine beliebige implantierbare medizinische oder biologische Vorrichtung handeln, so unter anderem um ein aktives, elektronisches Hörimplantat, einen Herzschrittmacher, einen Defibrillator, einen Drogenspender, einen Nerven- oder Knochenwachstumsstimulator, einen Neuro- oder Retinastimulator, ein Schmerzunterdrückungsgerät oder dergleichen.

Der vorliegend verwendete Begriff Lithium-Akkumulator soll beliebige wiederaufladbare Lithium-Systeme umfassen, insbesondere Zellen mit flüssigem organischem Elektrolyten, Festelektrolytzellen, Zellen mit anorganischem Elektrolyt und Lithium-Ionen-Zellen, wie Kohlenstoff/Lithium-Kobaltoxid-Zellen, Kohlenstoff/Lithium-Nickeloxid-Zellen und Kohlenstoff/Lithium-Manganoxid-Zellen mit flüssigem oder festem Polymerelektrolyten. Beispiele bekannter wiederaufladbarer Lithium-Systeme finden sich unter anderem in den vorstehend genannten US-PSen 5,702,431 und 5,411,537 und in Halaczek/Radecke, „Batterien und Ladekonzepte", 2. Auflage, 1998, Seite 148, Franzis' Verlag GmbH.

Vorteilhafte Weiterbildungen der Erfindung sind Gegenstand der Unteransprüche.

So ist der Ladestromgeber vorzugsweise so ausgebildet, daß der vorbestimmte Wert, auf dem die Zellenspannung im Verlauf der zweiten Ladephase gehalten wird, mindestens näherungsweise gleich dem Wert der am Ende der ersten Ladephase erreichten Ladegrenzspannung ist. Dadurch werden auch nach Erreichen der Ladegrenzspannung im weiteren Verlauf des Ladens schädliche Einflüsse auf den Akkumulator ausgeschlossen, während gleichzeitig die Ladegeschwindigkeit hoch bleibt.

Es versteht sich, daß der Spannungswert, auf dem die Zellenspannung im Verlauf der zweiten Ladephase gehalten wird, nicht exakt konstant zu sein braucht. Praktische Erfahrungen haben gezeigt, daß dieser Spannungswert von der am Ende der ersten Ladephase erreichten Ladegrenzspannung im allgemeinen um nicht mehr als $\pm 30\%$ vorzugsweise um nicht mehr als $\pm 20\%$, und besonders bevorzugt um nicht mehr als $\pm 10\%$ abweichen soll.

Entsprechend einer Weiterbildung der Erfindung ist eine Anordnung vorgesehen, welche die zeitlichen Änderung des Ladestromes erfaßt und den Ladevorgang beendet, wenn die Ladestromänderung pro Zeiteinheit im Verlauf der zweiten Ladephase einen vorbestimmten Mindestwert unterschreitet. Eine solche automatische Abschaltung des Ladevorgangs trägt gleichfalls dazu bei, Überladungen der Zelle zu verhindern. Außerdem kann so die Gesamtladezeit zuverlässig auf eine Dauer beschränkt werden, deren Überschreitung keine zusätzliche Aufladung mit vertretbarem Ladungs/Zeit- Verhältnis erwarten läßt.

Im Verlauf der ersten Ladephase wird der Ladestrom vorteihaft auf C/4 bis 4C begrenzt, wobei in üblicher Weise C gemessen in Ampere der Nennkapazität des Akkumulators gemessen in Ampere-Stunden entspricht. So hat beispielsweise für einen Akkumulator mit einer Nennkapazität von 2Ah ein Ladestrom von 2C einen Wert von 4A.

Zweckmäßig wird im Verlauf der ersten Ladephase der Ladestrom im Falle von Ni-Metallhydrid-Akkumulatorzellen auf einen Wert von C/2 bis 2C, vorzugsweise von C/2 bis C und besonders bevorzugt von C/2 bis 3/4C, begrenzt oder gegebenenfalls geregelt. Bei Lithium- Akkumulatorzellen erfolgt während der ersten Ladephase eine Ladestrombegrenzung oder -regelung zweckmäßig auf einen Wert von C/4 bis 4C, bevorzugt auf einen Wert von C/2 bis 2C, und besonders bevorzugt auf einen Wert von C/2 bis C.

Nachfolgend sind vorteilhafte Ausführungsformen der Erfindung anhand der Zeichnungen näher erläutert. Es zeigen:

Fig. 1     einen schematischen Schaltplan eines elektronischen Hörimplantats mit einer erfindungsgemäßen Ladevorrichtung;

Fig. 2     ein Ladecharakteristik eines mit Konstantstrom aufgeladenen Akkumulators; und

Fign. 3 bis 5     Ladecharakteristiken eines mittels der Ladevorrichtung nach der Erfindung aufgeladenen Akkumulators.

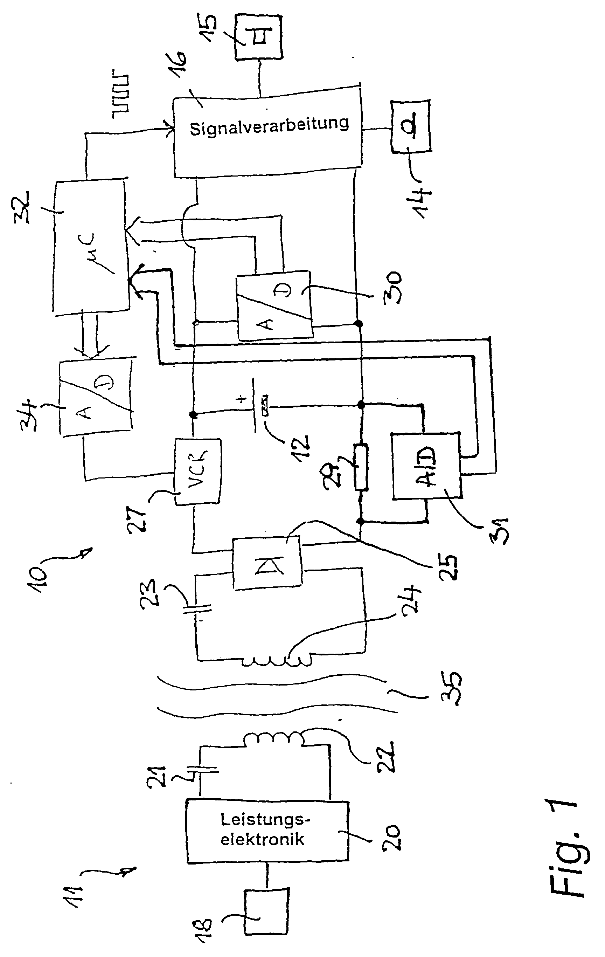

Die in Fig. 1 veranschaulichte Ladevorrichtung weist einen implantierbaren Energieempfangsteil 10 und einen externen (extrakorporalen) Energiesendeteil 11 auf. Die Ladevorrichtung dient dem Aufladen eines wiederaufladbaren Akkumulators 12, der seinerseits im vorliegenden Ausführungsbeispiel eine aktive implantierbare elektronische Hörhilfe mit Energie versorgt. Zu der Hörhilfe gehören unter anderem eine Sensoreinheit 14, insbesondere in Form eines Mikrofons, eine Aktoreinheit 15 sowie eine elektronische Signalverarbeitungs-und Verstärkerstufe 16. Bei der Aktoreinheit 15 kann es sich beispielsweise um einen an die Gehörknöchelchenkette mechanisch oder an die flüssigkeitsgefüllten Räume des Innenohres hydromechanisch ankoppelbaren elektromechanischen Wandler handeln. Solche Wandler sind in der US-PS 5,277,694, der US-PS 5,411,467 und der EP-A-0 831 674 im einzelnen erläutert und bedürfen daher vorliegend keiner näheren Beschreibung.

Der Energiesendeteil 11 weist einen Oszillator 18, eine Leistungselektronikstufe 20 und einen an die Ausgangsseite der Leistungselektronikstufe 20 angeschlossenen Serienresonanzkreis mit einem Kondensator 21 und einer externen Feldspule 22 auf.

Zu dem Energieempfangsteil 10 gehört ein Serienresonanzkreis mit einem Kondensator 23 und einer Implantatspule 24. Der Serienresonanzkreis 23, 24 speist eine Gleichrichterstufe 25, vorzugsweise in Form einer Vollbrückenschaltung. An den Ausgang der Gleichrichterstufe 25 ist der Akkumulator 12 über einen spannungsgesteuerten Widerstand (VCR) 27 angeschlossen. Der Akkumulator 12 speist die Signalverarbeitungs-und Verstärkerstufe 16. Parallel zu dem Akkumulator 12 liegt ein die Zellenspannung $U_Z$ des Akkumulators erfassender A/D-Wandler 30. In dem Ladestromkreis des Akkumulators 12 liegt zwischen der Gleichrichterstufe 25 und dem Akkumulator 12 ein Strommeßwiderstand 29, dem ein A/D-Wandler 31 parallelgeschaltet ist. Ein Mikrokontroller 32 nimmt Eingangssignale von den A/D-Wandlern 30 und 31 auf. Die Signalverarbeitungs-und Verstärkerstufe 16 und ein mit dem VCR 27 verbundener D/A-Wandler 34 sind an Ausgänge des Mikrokontrollers 32 angeschlossen.

Beide Serienresonanzkreise 21, 22 und 23, 24 sind auf die Frequenz des Oszillators 18 abgestimmt. Eine solche Resonanz-Ladevorrichtung ist im Prinzip aus der US-PS 5,279,292 bekannt.

Ein Ladevorgang beginnt damit, daß die externe Feldspule 22 an der Außenseite der Haut 35 des Implantatträgers so plaziert wird, daß sie mindestens näherungsweise mit der Implantatspule 24 ausgerichtet ist. Die Leistungselektronikstufe 18 speist im Zusammenwirken mit dem Oszillator 18, vorzugsweise in an sich aus US-PS 5 279 292 bekannter Weise, in die Feldspule 22 einen Wechselstrom ein, der zweckmäßig eine Frequenz im Bereich von 40 kHz bis 50 MHz hat. Durch das dabei von der Feldspule 22 erzeugte elektromagnetische Wechselfeld wird in der Implantatspule 24 transkutan ein Wechselstrom induziert, der in der Gleichrichterstufe 25 gleichgerichtet wird. Der Akkumulator 12 wird mit dem gleichgerichteten Ladestrom $I_L$ über den in Reihe mit dem Ausgang der Gleichrichterstufe 25 liegenden VCR 27 aufgeladen, wobei der von dem Mikrokontroller 32 über den D/A-Wandler 34 gesteuerte momentane Widerstandswert des VCR 27 den aus der Gleichrichterstufe 25 in den Akkumulator eingespeisten Ladestrom $I_L$ bestimmt. Die Größe des Ladestromes $I_L$ wird aus dem Spannungsabfall an dem Strommeßwiderstand 29 ermittelt; eine entsprechende Meßgröße geht dem Mikrokontroller 32 über den A/D-Wandler 31 zu.

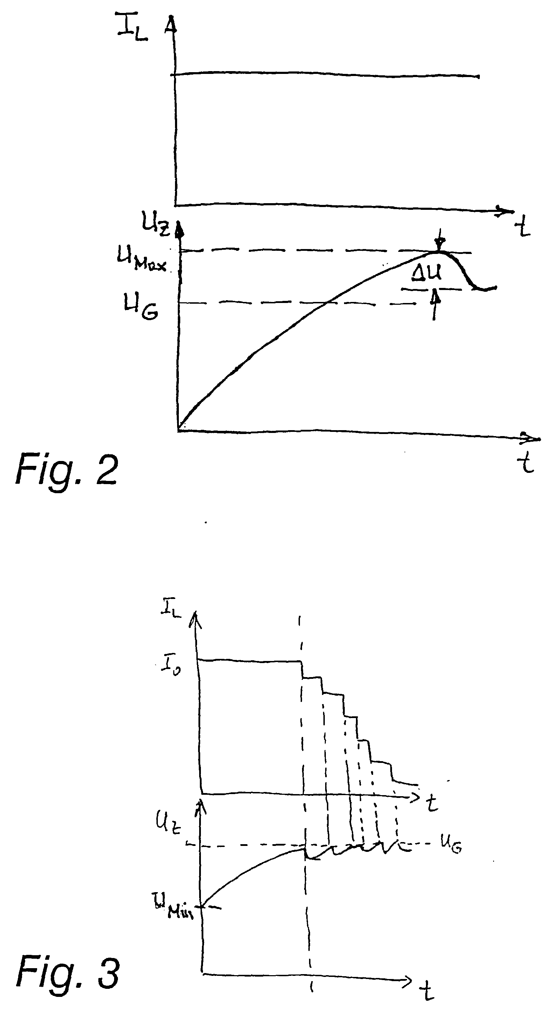

Bei dem Akkumulator 12 handelt es sich um einen wiederaufladbaren NiCd-, Ni-Metallhydrid- oder Lithium- Akkumulator. Ein solcher Akkumulator hat typischerweise eine Ladecharakteristik der in Fig. 2 veranschaulichten Art. Die Ladecharakteristik zeigt die Zellenspannung $U_Z$ des Akkumulators in Abhängigkeit von der Zeit t bei einem konstantem Ladestrom $I_L$. Wie dargestellt ist, steigt die Zellenspannung $U_Z$ bis zu einem Maximum $U_{Max}$ an, und sie sinkt anschließend um $\Delta U$ ab.

Vorliegend ist die Auslegung der Stufen 32, 34 und 27 so getroffen, daß in der in Fig. 3 skizzierten Weise die Aufladung des Akkumulators 12 mit einer Hochstromladephase ähnlich Fig. 2 beginnt. In dieser ersten Ladephase T1 ist der Ladestrom $I_L = I_0$ so gewählt, daß einerseits eine möglichst rasche Aufladung erreicht wird, andererseits aber Akkumulatorschäden mit Sicherheit ausgeschlossen sind. Im Falle von Ni-Metallhydrid- Akkumulatorzellen wird der Ladestrom $I_L$ in der Hochstromladephase T1 vorteilhaft auf einen Wert von C/2 bis 2C, vorzugsweise von C/2 bis C und besonders bevorzugt von C/2 bis 3/4 C, begrenzt. Bei Lithium-Akkumulatorzellen erfolgt während der Hochstromladephase eine Begrenzung des Ladestromes $I_L$ zweckmäßig auf einen Wert von C/4 bis 4C, bevorzugt auf einen Wert von C/2 bis 2C, und besonders bevorzugt auf einen Wert von C/2 bis C. Es kann auch zweckmäßig sein, während der Hochstromladephase den Ladestrom $I_L$ anhand des über den A/D-Wandler 31 erfaßten Stom-Istwertes auf einen vorgegebenen Sollwert zu regeln. In dieser ersten Ladephase steigt die Zellenspannung $U_Z$ stetig an.

Wenn die Überwachung der Zellenspannung $U_Z$ des Akkumulators 12 durch den Mikrokontroller 32 über den A/D-Wandler 30 ergibt, daß die Zellenspannung eine Ladegrenzspannung $U_G$ erreicht, stellt der Mikrokontroller 32 über den D/A-Wandler 34 und den VCR 27 den Ladestrom $I_L$ für eine zweite Ladephase T2 in entsprechend gewählten Stufen so zurück, daß die Zellenspannung $U_Z$ für den weiteren Verlauf des Ladevorgangs mindestens näherungsweise konstant bleibt, wie dies aus Fig. 3 hervorgeht. Die Ladegrenzspannung $U_G$ ist wiederum so gewählt, daß der Akkumulator beim Aufladen keinen Schaden erleiden kann. Vorzugsweise ist die Ladegrenzspannung $U_G$ kleiner als $U_{Max}$ minus $\Delta U$. Bei Ni-Metallhydrid- Akkumulatorzellen hat sich eine Ladegrenzspannung $U_G$ im Bereich von 1,3 bis 1,6 Volt und vorzugsweise von 1,4 bis 1,5 Volt als zweckmäßig erwiesen. Bei 2 Volt -Lithium-Systemen wird vorteilhaft mit einer Ladegrenzspannung $U_G$ von 1,2 bis 2,5 Volt und vorzugsweise von 1,5 bis 2,3 Volt gearbeitet. Für 4 Volt -Lithium-Systeme eignet sich insbesondere eine Ladegrenzspannung $U_G$ von 3,6 bis 4,5 Volt und vorzugsweise von 3,8 bis 4,3 Volt. Zweckmäßig sollte in der zweiten Ladephase T2 die Zellenspannung $U_Z$ um nicht mehr als $\pm$ 30%, vorzugsweise um nicht mehr als $\pm$ 20%, und besonders bevorzugt um nicht mehr als $\pm$ 10% variieren beziehungsweise von der Ladegrenzspannung $U_G$ abweichen.

Vorzugsweise ist die Anordnung ferner so getroffen, daß mittels des Mikrokontrollers 32 auch die zeitliche Änderung des Ladestromes, das heißt der

Wert $\Delta I_L/\Delta t$, während der zweiten Ladephase T2 erfaßt wird und die zweite Ladephase und damit auch der Gesamtladevorgang beendet wird, wenn eine vorbestimmte Steigung der Ladestromkurve unterschritten wird, mit anderen Worten, wenn $\Delta I_L/\Delta t$ kleiner als ein vorgegebener Mindestwert wird. Die Bestimmung von $\Delta I_L/\Delta t$ kann dabei direkt durch Erfassen der am Strommeßwiderstand 29 abfallenden Spannung über den A/D-Wandler 31 erfolgen. Es ist aber auch möglich, $\Delta I_L/\Delta t$ indirekt aus dem Wert abzuleiten, den der Mikrokontroller 32 für den VCR 27 vorgibt.

Der Mikrokontroller 32 wird vorteilhaft in der in Fig. 1 angedeuteten Weise auch zur Steuerung der Signalverarbeitungs- und Verstärkerstufe 16 genutzt. Außerdem ist das Programm des Mikrokontrollers 32 vorzugsweise so ausgelegt, daß der Mikrokontroller 32 die Signalverarbeitungs- und Verstärkerstufe 16 an einer weiteren Energieentnahme aus dem Akkumulator 12 hindert, wenn über den A/D-Wandler 30 ermittelt wird, daß die Zellenspannung $U_Z$ des Akkumulators 12 auf einen vorgegebenen Mindestwert $U_{Min}$ abgesunken ist. Durch die erläuterten Mittel und Maßnahmen ist der Akkumulator 12 sowohl gegen eine Tiefentladung als auch gegen eine Überladung wirkungsvoll geschützt.

Die Mittel, die erforderlich sind, um den Ladestrom $I_L$ in der geschilderten Weise in Abhängigkeit vom der Zellenspannung $U_Z$ des Akkumulators 12 einzustellen, können, wie in Fig. 1 dargestellt, im implantierbaren Energieempfangteil 10 untergebracht sein. Grundsätzlich können sie aber auch im externen Energiesendeteil 11 vorgesehen oder auf beide Teile 10 und 11 verteilt sein. Das Energiesendeteil 11 kann für eine Speisung mit Netzstrom und/oder für eine Speisung aus einer extrakorporal angeordneten Batterie ausgelegt sein.

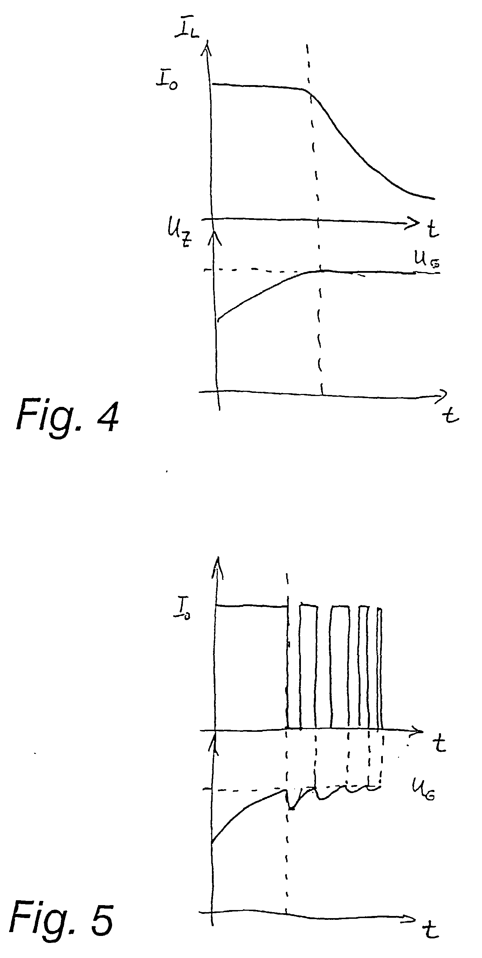

Durch Wahl von entsprechend kleinen Werten für $\Delta I_L$ und $\Delta t$ läßt sich ein quasi-stetiger Verlauf der Kurven für den Ladestrom $I_L$ und die Zellenspannung $U_Z$ erreichen, wie dies in Fig. 4 dargestellt ist. Für den Fachmann versteht es sich aber auch, daß ein solcher stetiger Verlauf durch den Einsatz von entsprechenden analogen Schaltungskomponenten erzielt werden kann.

Des weiteren ist es möglich, den VCR 27 über den Mikrokontroller 32 so zu steuern, daß er als Pulsweitenmodulator arbeitet, um die vorstehend geschilderte Art der Steuerung des Ladestromes $I_L$ in Abhängigkeit von der ermittelten Zellenspannung $U_Z$ durch Pulsweitenmodulation des Ladestromes $I_L$ vorzunehmen, wie dies in Fig. 5 veranschaulicht ist.

Der Mikrokontroller 32 kann zweckmäßig so programmiert sein, daß er einen Ladevorgang erst dann beginnen läßt, wenn in dem Ladestromkreis des Akkumulators 12 ein Mindeststrom fließt.

**Patentansprüche**

1. Ladevorrichtung zum Laden von wiederaufladbaren NiCd-, Ni-Metallhydrid- oder Lithium- Akkumulatoren (12) von Implantaten durch transkutanes Übermitteln von elektrischer Energie von einem externen Energiesendeteil (11) an einen einen Teil des Implantats bildenden Energieempfangsteil (10), wobei die Ladevorrichtung mit einem Ladestromgeber (27, 32, 34) versehen ist, der in einer ersten Ladephase (T1) einen relativ hohen, auf einen vorgegebenen Höchstwert ($I_0$) begrenzten Ladestrom ($I_L$) fließen läßt und der, nachdem die Zellenspannung ($U_Z$) des Akkumulators eine vorbestimmte Ladegrenzspannung ($U_G$) erreicht hat, in einer zweiten Ladephase (T2) den Ladestrom im Vergleich zu dem in der ersten Ladephase fließenden Ladestrom reduziert, **dadurch gekennzeichnet,** daß der Ladestromgeber (27, 32, 34) so ausgebildet ist, daß er im Verlauf der zweiten Ladephase (T2) den Ladestrom auf einen solchen Wert einstellt, daß die Zellenspannung ($U_Z$) während der zweiten Ladephase mindestens näherungsweise auf einem vorbestimmten konstanten Spannungswert ($U_G$) gehalten wird.

2. Ladevorrichtung nach Anspruch 1, dadurch gekennzeichnet, daß der Ladestromgeber (27, 32, 34) so ausgebildet ist, daß der vorbestimmte Wert, auf dem die Zellenspannung ($U_Z$) im Verlauf der zweiten Ladephase (T2) gehalten wird, mindestens näherungsweise gleich dem Wert der am Ende der ersten Ladephase (T1) erreichten Ladegrenzspannung ($U_G$) ist.

3. Ladevorrichtung nach Anspruch 2, daß der Ladestromgeber (27, 32, 34) so ausgebildet ist, daß der Wert, auf dem die Zellenspannung ($U_Z$) im Verlauf der zweiten Ladephase (T2) gehalten wird, von der am Ende der ersten Ladephase (T1) erreichten Ladegrenzspannung ($U_G$) um nicht mehr als $\pm$ 30% abweicht.

4. Ladevorrichtung nach Anspruch 3, daß der Ladestromgeber (27, 32, 34) so ausgebildet ist, daß der Wert, auf dem die Zellenspannung ($U_Z$) im Verlauf der zweiten Ladephase (T2) gehalten wird, von der am Ende der ersten Ladephase (T1) erreichten Ladegrenzspannung ($U_G$) um nicht mehr als $\pm$ 20% vorzugsweise um nicht mehr als $\pm$ 10% abweicht.

5. Ladevorrichtung nach einem der vorhergehenden Ansprüche, gekennzeichnet durch eine Anordnung (32) zum Erfassen der zeitlichen Änderung ($\Delta I_L/\Delta t$) des Ladestromes ($I_L$) und zum Beenden des Ladevorgangs, wenn die Ladestromänderung pro Zeiteinheit im Verlauf der zweiten Ladephase (T2) einen vorbestimmten Mindestwert unterschreitet.

6. Ladevorrichtung nach einem der vorhergehenden Ansprüche, dadurch gekennzeichnet, daß der Ladestromgeber (27, 32, 34) so ausgebildet ist, daß er im Verlauf der ersten Ladephase (T1) den Ladestrom ($I_L$) auf C/4 bis 4C begrenzt.

7. Ladevorrichtung nach Anspruch 6, dadurch gekennzeichnet, daß der Ladestromgeber (27, 32, 34) so ausgebildet ist, daß er im Verlauf der ersten Ladephase (T1) den Ladestrom ($I_L$) im Falle von Ni-Metallhydrid- Akkumulatorzellen auf einen Wert von C/2 bis C, vorzugsweise von C/2 bis 3/4 C, und im Falle von Lithium- Akkumulatorzellen auf einen Wert von C/2 bis 2C, vorzugsweise von C/2 bis C, begrenzt.

8. Ladevorrichtung nach einem der Ansprüche 1 bis 7, gekennzeichnet durch eine Anordnung (27, 32, 34) zum stufenweisen Reduzieren des Ladestromes ($I_L$) im Verlauf der zweiten Ladephase (T2).

9. Ladevorrichtung nach Anspruch 8, dadurch gekennzeichnet, daß die Anordnung zum stufenweisen Reduzieren des Ladestromes ($I_L$) im Verlauf der zweiten Ladephase (T2) einen Mikrokontroller (32), einen von dem Mikrokontroller gesteuerten spannungsgeregelten Widerstand (27) und einen zwischen Mikrokontroller und Widerstand geschalteten Digital/Analog-Wandler (34) aufweist.

10. Ladevorrichtung nach einem der Ansprüche 1 bis 7, gekennzeichnet durch eine Anordnung (27, 32, 34) zum Reduzieren des Ladestromes ($I_L$) im Verlauf der zweiten Ladephase (T2) durch Pulsweitenmodulation (47) des Ladestromes.

11. Ladevorrichtung nach einem der Ansprüche 1 bis 10, dadurch gekennzeichnet, daß zum Erfassen der Zellenspannung ($U_Z$) ein Analog/Digitalwandler (30) und ein Mikrokontroller (32) vorgesehen sind.

12. Ladevorrichtung nach einem der vorhergehenden Ansprüche, dadurch gekennzeichnet, daß der externe Energiesendeteil (11) als batteriebetriebenes Gerät ausgebildet ist.

13. Verfahren zum Laden von wiederaufladbaren NiCd-, Ni-Metallhydrid- oder Lithium- Akkumulatoren von Implantaten durch transkutanes Übermitteln von elektrischer Energie, bei dem in einer ersten Ladephase der Ladestrom auf einen relativ hohen Wert begrenzt wird, und bei dem, nachdem die Zellenspannung eine vorbestimmte Ladegrenzspannung erreicht hat, in einer zweiten Ladephase der Ladestrom im Vergleich zu dem in der ersten Ladephase fließenden Ladestrom reduziert wird, **dadurch gekennzeichnet,** daß im Verlauf der zweiten Ladephase der Ladestrom auf einen solchen Wert eingestellt wird, daß die Zellenspannung mindestens näherungsweise auf einem vorbestimmten konstanten Spannungswert gehalten wird.

14. Verfahren nach Anspruch 13, dadurch gekennzeichnet, daß der vorbestimmte Spannungswert, auf dem die Zellenspannung im Verlauf der zweiten Ladephase gehalten wird, mindestens näherungsweise gleich der am Ende der ersten Ladephase erreichten Ladegrenzspannung ist.

15. Verfahren nach Anspruch 13 oder 14, dadurch gekennzeichnet, daß der vorbestimmte Spannungswert, auf dem die Zellenspannung im Verlauf der zweiten Ladephase gehalten wird, von der am Ende der ersten Ladephase erreichten Ladegrenzspannung um nicht mehr als ± 30% abweicht.

16. Verfahren nach Anspruch 15 dadurch gekennzeichnet, daß der vorbestimmte Spannungswert, auf dem die Zellenspannung im Verlauf der zweiten Ladephase gehalten wird, von der am Ende der ersten Ladephase erreichten Ladegrenzspannung um nicht mehr als ± 20%, vorzugsweise um nicht mehr als ± 10%, abweicht.

17. Verfahren nach einem der Ansprüche 13 bis 16 dadurch gekennzeichnet, daß die zeitliche Änderung des Ladestromes erfaßt wird und der Ladevorgang beendet wird, wenn die Ladestromänderung pro Zeiteinheit im Verlauf der zweiten Ladephase einen vorbestimmten Mindestwert unterschreitet.

18. Verfahren nach einem der Ansprüche 13 bis 17, dadurch gekennzeichnet, daß im Verlauf der ersten Ladephase der Ladestrom auf C/4 bis 4C begrenzt wird.

19. Verfahren nach Anspruch 18, dadurch gekennzeichnet, daß im Verlauf der ersten Ladephase der Ladestrom im Falle von Ni-Metallhydrid- Akkumulatorzellen auf einen Wert von C/2 bis C, vorzugsweise von C/2 bis 3/4 C, und im Falle von Lithium- Akkumulatorzellen auf einen Wert von C/2 bis 2C, vorzugsweise von C/2 bis C, begrenzt. wird.

20. Verfahren nach einem der Ansprüche 13 bis 19 , dadurch gekennzeichnet, daß im Verlauf der zweiten Ladephase der Ladestrom stufenlos reduziert wird.

21. Verfahren nach einem der Ansprüche 13 bis 19 , dadurch gekennzeichnet, daß im Verlauf der zweiten Ladephase der Ladestrom stufenweise reduziert wird.

22. Verfahren nach einem der Ansprüche 13 bis 19, dadurch gekennzeichnet, daß im Verlauf der zweiten Ladephase der Ladestrom durch Pulsweitenmodulieren reduziert wird.

23. Verfahren nach einem der Ansprüche 13 bis 22, dadurch gekennzeichnet, daß die elektrischer Energie in Form von Wechselstrom mit einer Frequenz im Bereich von 40 kHz bis 50 MHz transkutan übermittelt wird.

Fig. 1

EP 0 987 808 A2

Fig. 2

Fig. 3

Fig. 4

Fig. 5